# EUROPEAN PATENT APPLICATION

(11) **EP 3 168 824 A1**
(43) Date of publication of application: **17.05.2017**
(21) Application number: 15465557.5
(22) Date of filing: 10.11.2015
(51) Int. Cl.: G08G 1/16, B60W 30/18, G01S 13/89, G01S 13/93, G05D 1/02, G06K 9/00

(54) **A SYSTEM AND A METHOD FOR VEHICLE LENGTH DETERMINATION**

(71) Applicant: Continental Automotive GmbH, 30165 Hannover (DE)
(72) Inventor: Kovacs, Andrei, 305500 Lugoj (RO)
(74) Representative: Bobbert, Christiana

(57) **Abstract**

A vehicle length determination system (1) of a vehicle (VEH) configured to determine a length (L) of another vehicle (VEH') in the vehicle's vicinity, said vehicle length determination system (1) comprising a detection unit (2) adapted to detect a first distance (d1) between the vehicle (VEH) and a front or rear side of the other vehicle (VEH'), and adapted to detect a second distance (d2) between the vehicle (VEH) and a vehicle component mounted to a chassis of the other vehicle (VEH'), and a control unit (3) adapted to calculate the length (L) of the other vehicle (VEH') depending on the determined first and second distance (d1, d2).

## Description

The invention relates to a method and a system for vehicle length determination of a vehicle such as a car or a truck.

Vehicles are equipped more and more with driver assistance systems supporting a driver of the vehicle in performing driving maneuvers when driving the vehicle. Many driving maneuvers are performed with respect to other traffic participants, in particular other vehicles driving on the same or a different lane of a street taken by the respective vehicle. For performing these driving maneuvers, the size and dimensions of other vehicles within the vicinity are relevant. For example, when overtaking another vehicle driving on the same road, the length of the vehicle in front is relevant for a successful driving maneuver. If the length of the vehicle is relatively high as is in the case of a long truck, the overtaking vehicle must be accelerated more than in a traffic scenario where the vehicle in front is relatively short.

Accordingly, it is an object of the present invention to provide a method and a system for determining the length of another vehicle in a traffic scenario.

This object is achieved according to a first aspect of the present invention by a vehicle length determination system comprising the features of claim 1.

The invention provides according to a first aspect a vehicle length determination system of a vehicle configured to determine a length of another vehicle in the vehicle's vicinity, said vehicle length determination system comprising:
a detection unit adapted to detect a first distance between the vehicle and a front or rear side of the other vehicle,
and adapted to detect a second distance between the vehicle and a vehicle component mounted to a chassis of the other vehicle, and
a control unit adapted to calculate the length of the other vehicle depending on the determined first and second distance.

In a possible embodiment of the vehicle length determination system according to the first aspect of the present invention, the detection unit is adapted to detect at a second distance the distance between the vehicle and a side mirror component of the other vehicle.

In a further possible embodiment of the vehicle length determination system according to the first aspect of the present invention, the control unit is adapted to calculate the length of the other vehicle by subtracting the detected first distance from the detected second distance and adding a standard value.

In a still further possible embodiment of the vehicle length determination system according to the first aspect of the present invention, the detection unit comprises a radar unit and/or a LIDAR unit and/or a camera unit.

In a further possible embodiment of the vehicle length determination system according to the first aspect of the present invention, the control unit is configured to generate control signals for controlling a driving maneuver of the vehicle in response to the calculated length of the other vehicle.

In a further possible embodiment of the vehicle length determination system according to the first aspect of the present invention, the standard value is a configurable standard value stored in a memory of the vehicle length determination system.

In a further possible embodiment of the vehicle length determination system according to the first aspect of the present invention, the control unit is configured to determine a relative velocity between the vehicle and the other vehicle depending on monitored first and/or second distances detected by said detection unit.

In a further possible embodiment of the vehicle length determination system according to the first aspect of the present invention, the control unit is configured to generate control signals for controlling a driving maneuver of said vehicle in response to the calculated length of the other vehicle and in response to the determined relative velocity.

In a still further possible embodiment of the vehicle length determination system according to the first aspect of the present invention, the control unit is adapted to determine whether the other vehicle is on the same or on a different lane depending on sensor signals provided by said at least one detection unit.

In a further possible embodiment of the vehicle length determination system according to the first aspect of the present invention, the control unit is configured to generate control signals for controlling a driving maneuver of said vehicle in response to the calculated length of the other vehicle and in response to the determined lane of the other vehicle.

The invention further provides according to a second aspect a method for determining a length of another vehicle comprising the features of claim 11.

The invention provides according to the second aspect a method for determining a length of another vehicle by a vehicle length determination system of a vehicle, said method comprising the steps of:
determining a first distance between the vehicle and a front or rear side of the other vehicle,
detecting a second distance between the vehicle and a vehicle component mounted to a chassis of the other vehicle, and calculating the length of the other vehicle depending on the determined first and second distances.

In a possible embodiment of the method according to the second aspect of the present invention the length of the other vehicle is calculated by subtracting the detected first distance from the detected second distance and by adding a standard value to the calculated difference.

In a further possible embodiment of the method according to the second aspect of the present invention, control signals for controlling a driving maneuver of the vehicle are generated in response to the calculated length of the other vehicle.

In a further possible embodiment of the method according to the second aspect of the present invention, the determination of the distances is performed continuously.

In a still further possible embodiment of the method according to the second aspect of the present invention, the determination of the distances is triggered by a detected event.

The invention further provides according to a third aspect a driver assistance system comprising the features of claim 15.

The invention provides according to the third aspect a driver assistance system comprising a vehicle length determination system according to the first aspect of the present invention.

In the following, possible embodiments of the different aspects of the present invention are described in more detail with reference to the enclosed figures.
- Figure 1: shows a block diagram of a possible embodiment of a vehicle length determination system according to the first aspect of the present invention;
- Figure 2: shows a schematic diagram of a vehicle comprising a driver assistance system using a vehicle length determination system according to the first aspect of the present invention;
- Figure 3: shows a schematic diagram for illustrating an exemplary traffic scenario for explaining the operation of a vehicle length determination system according to the present invention;

- Figures 4, 5: show schematic diagrams for illustrating the functionality of a vehicle length determination system according to the present invention;
- Figure 6: shows a flowchart of a possible exemplary embodiment of a vehicle length determination method according to an aspect of the present invention.

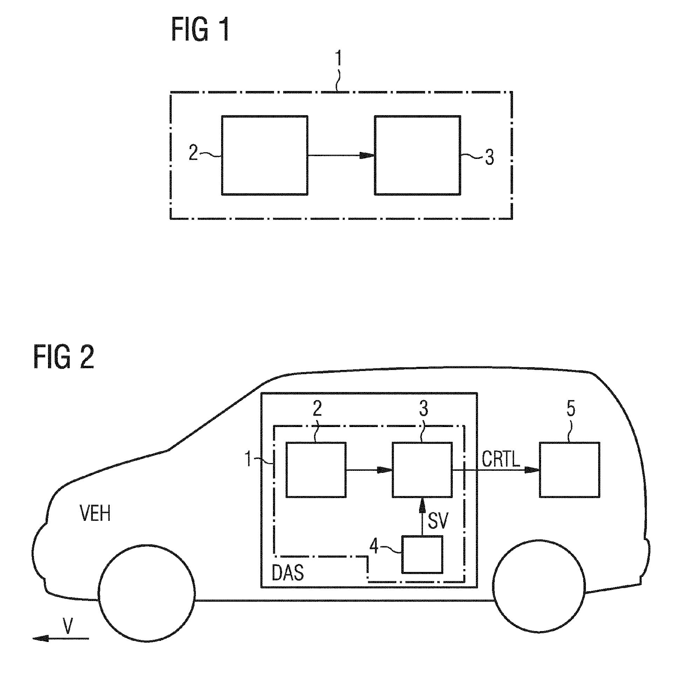

As can be seen in Figure 1 the vehicle length determination system 1 of a vehicle VEH according to the first aspect of the present invention comprises in the illustrated embodiment a detection unit 2 and a control unit 3. The vehicle length determination system 1 of the vehicle VEH as shown in Figure 1 is configured to determine a length L of another vehicle VEH' in the vehicle's vicinity. The detection unit 2 is adapted to detect a first distance d1 between the vehicle and a front or rear side of the other vehicle VEH'. The detection unit 2 is further adapted to detect a second distance d2 between the respective vehicle VEH and a vehicle component mounted to a chassis of the other vehicle VEH'. The vehicle component mounted to the chassis of the other vehicle VEH' can be for instance a side mirror component SMC of the other vehicle VEH'.

The vehicle length determination system 1 further comprises a control unit 3 connected to the detection unit 2. The control unit 1 can in a possible embodiment be integrated in the detection unit 2. The control unit 3 receives the detected first distance d1 and the detected second distance d2 from the detection unit 2. The control unit 3 is adapted to calculate the length L of the other vehicle VEH' depending on the determined first and second distance d1, d2. The control unit 3 comprises in a possible embodiment a processing unit for processing the received data. In a possible embodiment, the control unit 3 comprises a processing unit adapted to calculate the length L of the other vehicle by subtracting the detected first distance d1 from the detected second distance d2 and adding a configurable standard value SV. This standard value SV can be for example 1.5 meters reflecting the typical distance between a side mirror SMC component mounted to the chassis of a vehicle to a front end of the respective vehicle. In a possible embodiment, the standard value SV is a configurable value which can be adjusted by means of a configuration interface. In a possible embodiment, the configured standard value SV is stored in an internal memory of the vehicle length determination system 1. The detection unit 2 of the vehicle length determination system 1 as illustrated in Figure 1 can be formed by one or several subsystems including a radar system, a LIDAR system and/or a camera system providing information about position and distances of other vehicles in the vicinity or surroundings of the respective vehicle VEH. The Lidar system measures a distance by illuminating a target with a laser and analyzing the reflected light. In a possible embodiment, the control unit 3 is adapted to generate control signals CRTL for controlling a driving maneuver of the vehicle VEH in response to the calculated length L of the other vehicle. In a possible embodiment, the driving maneuver of the vehicle is performed depending on the calculated length L of the other vehicle VEH' and depending on the own size, i.e. width and length of the respective vehicle VEH.

In a further possible embodiment, the control unit 3 of the vehicle length determination system 1 is further configured to determine a relative velocity V_{R} between the vehicle VEH and the other vehicle VEH' depending on monitored first and/or second distances d1, d2 detected by the detection unit 2. In a possible embodiment, the distances are monitored continuously by the detection unit 2. Further, a speed sensor of the vehicle VEH can provide the control unit 3 with the current velocity V of the respective vehicle VEH. For instance, if the vehicle VEH is standing comprising a velocity of zero (V=0) and the first and second distances d1, d2 to the other vehicle VEH' are increasing, it can be determined by the control unit 3 that the other vehicle VEH' is departing from the vehicle VEH. Contrary, if the vehicle VEH is standing and comprises a velocity of zero (V=0) and the detected first and second distances d1, d2 are continuously reduced, it can be inferred that the other vehicle VEH' is approaching the vehicle VEH. In a further possible embodiment, the control unit 3 is further adapted to determine, whether the other vehicle VEH' is on the same or on a different lane of the road depending on sensor signals provided by the at least one detection unit 2. In a possible embodiment, the control unit 3 is configured to generate control signals CRTL for controlling a driving maneuver of the vehicle VEH in response to the calculated length L of the other vehicle VEH' and/or in response to the determined current lane of the other vehicle VEH' and/or the predetermined length of the vehicle VEH itself.

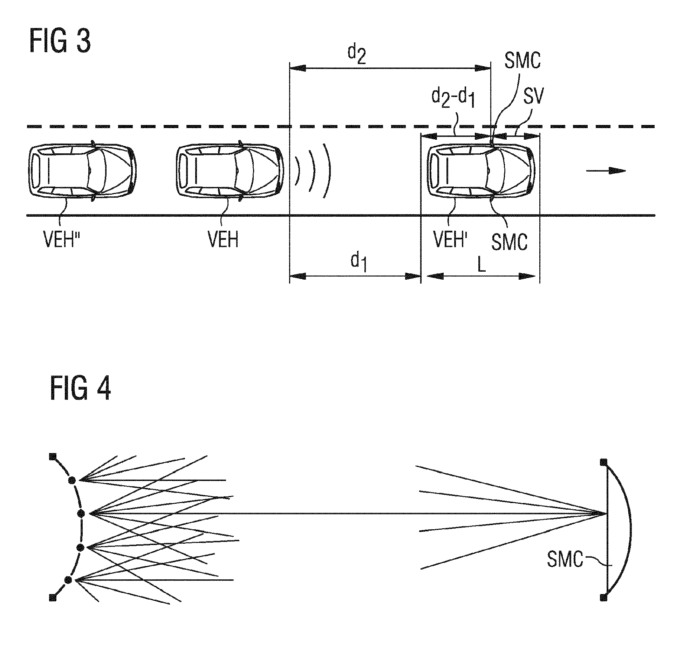

Figure 2 shows a possible exemplary embodiment of a vehicle VEH having a driver assistance system DAS comprising a vehicle length determination system 1 according to the first aspect of the present invention. The vehicle VEH moves on a road with a current velocity V as illustrated in Figure 2. The detection unit 2 has a radar unit and/or a LIDAR unit and/or a camera unit which is provided on the front side of the vehicle VEH and adapted to detect a first distance d1 between the vehicle VEH and a front or rear side of another vehicle VEH' in the vehicle's vicinity. The detection unit 2 is further adapted to detect a second distance d2 between the vehicle VEH and a vehicle component mounted to the chassis of the other vehicle VEH'. This component can be in a possible embodiment a side mirror component SMC of the other vehicle VEH'. The control unit 3 of the vehicle length determination system 1 calculates the length L of the other vehicle VEH' depending on the determined first and second distances d1, d2 received from the detection unit 2. In a possible embodiment, the control unit 3 comprises a processing unit which calculates the length L of the other vehicle VEH' in real time by subtracting the detected first distance d1 from the detected second distance d2 and adding a standard value SV to the calculated difference. The processing unit of the control unit 3 as shown in Figure 2 reads in a possible embodiment a standard value SV from a data memory 4 of the vehicle length determination system 1. In a possible embodiment, the standard value SV is a configurable value configured by means of a configuration interface of the driver assistance system DAS. In a possible exemplary implementation, the standard value SV can be for instance configured to be 1.5 meters. The control unit 3 generates control signals CRTL for controlling a driving maneuver of the respective vehicle VEH in response to the calculated length L of the other vehicle VEH'. In a possible embodiment, the control unit 3 can supply control signals CRTL to one or several actuators 5 or other subsystems of the respective vehicle VEH. For example, depending on the length L of the other vehicle VEH', an engine control unit 5 of the vehicle VEH can be controlled to adjust the acceleration of the vehicle VEH during an overtaking maneuver to the determined length L of the other vehicle VEH' which is to be overtaken by the vehicle VEH. If the other vehicle VEH' is moving in front of the vehicle VEH and has a high length L, the engine of the vehicle VEH must accelerate the vehicle VEH more than in a traffic scenario where a short vehicle has to be overtaken. This is explained in more detail with reference to the traffic scenario illustrated in Figure 3. As can be seen in Figure 3, a vehicle VEH comprising the driver assistance system DAS as shown in Figure 2 is following another vehicle VEH' on the same lane of a road. The vehicle VEH comprises a vehicle length determination system 1 according to the first aspect of the present invention including a detection unit 2 and a control unit 3. The detection unit 2 of the vehicle VEH is adapted to detect a first distance d1 between the vehicle VEH and a rear side of the vehicle VEH' in front. Further, the detection unit 2 of the vehicle VEH is adapted to detect a second distance d2 between the vehicle VEH and a vehicle component mounted to the chassis of the other vehicle VEH'. In the illustrated example, the vehicle component of the other vehicle VEH' is a side mirror component SMC as shown in Figure 3. The detection unit 2 of the vehicle length determination system 1 implemented within the vehicle VEH determines the distances d1, d2 continuously or in response to a detected event or input. For example, if the driver of the following vehicle VEH intends to overtake the vehicle VEH' in front of his vehicle VEH, he may set a left turn signal or blinker of the vehicle VEH to indicate his intention to overtake the vehicle VEH'. By setting the turn light, the control unit 3 of the vehicle length determination system 1 can be triggered to calculate automatically the length L of the other vehicle VEH' depending on the determined first and second distances d1, d2. In a possible implementation, the calculated length L of the vehicle VEH' can be output to the driver of the following vehicle VEH through a user interface. In a possible implementation, the length L of the other vehicle VEH' can be visualized to the driver of the following vehicle VEH by the driver assistance system DAS. In a possible embodiment, the first distance d1 between the vehicle and the front or rear side of the other vehicle VEH' is monitored continuously. The monitoring of the first distance d1 can be performed periodically by the detection unit 2 of the vehicle VEH. When the monitored distance d1 falls below a predetermined threshold value, this event can trigger in a possible embodiment an automatic determination of the second distance d2 by the same or another detection unit 2 of the vehicle length determination system 1 and/or the calculation of the length L of the approached close vehicle VEH' depending on the determined first and second distances d1, d2.

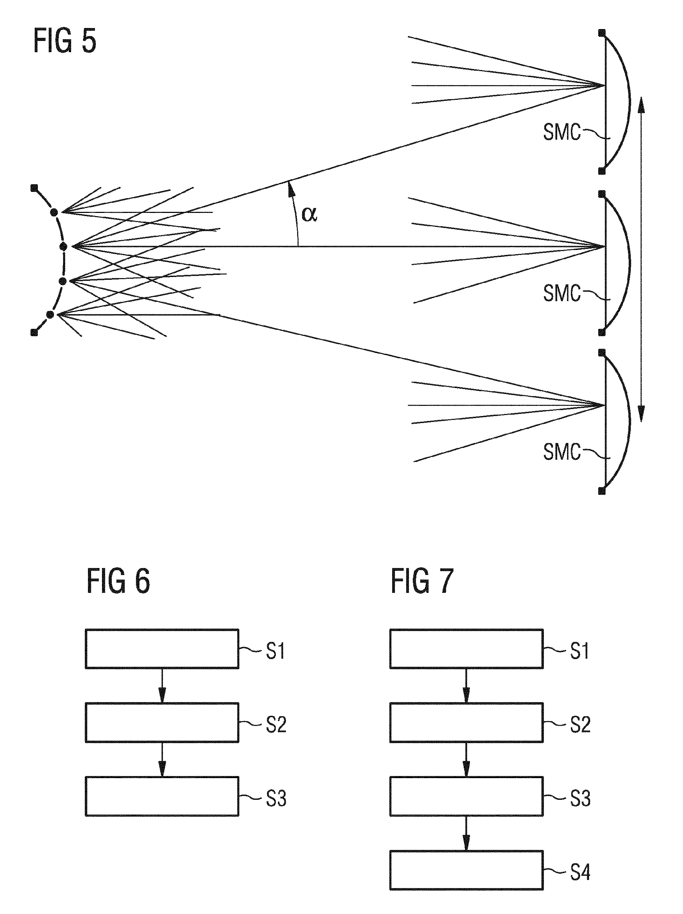

Figures 4, 5 illustrate the operation of a detection unit 2 as employed by the vehicle length determination system 1 according to the first aspect of the present invention. Figure 4 shows schematically a side mirror component SMC of another vehicle VEH' detected by a detection unit 2 of the vehicle length determination system 1. Signals emitted by the detection unit 2 are reflected by the side mirror component SMC back to the detection unit 2 for detecting the distance d2 between the side mirror component SMC and the detection unit 2 of the vehicle VEH.

Figure 5 illustrates different angles α of reflection between the side mirror component SMC and the detection unit 2 of the vehicle length determination system 1 according to the first aspect of the present invention. As can be seen from Figure 5, the second distance d2 between the side mirror component SMC of the vehicle VEH' and the detection unit 2 of the vehicle length determination system 1 within the vehicle VEH can be determined by different angles. Accordingly, it is possible to detect the second distance d2 even when the other vehicle VEH' is not positioned exactly in front of the following vehicle VEH. In a possible embodiment, the detection unit 2 can also detect the relative position of the other vehicle VEH' depending on the reflection angles α as illustrated in Figure 5. In a further possible embodiment, the control unit 3 is adapted to determine, whether the other vehicle VEH' is on the same or on a different road lane depending on the sensor signals provided by the at least one detection unit 2. In a possible embodiment, the control unit 3 can evaluate the reflection angles α to determine, whether the other vehicle VEH' is driving on the same or another lane of the road. In a possible embodiment, a detection unit 2 of the vehicle VEH can also determine traffic markers M such as lane strips as shown in Figure 3 to determine, whether another vehicle VEH' is moving on the same or different lane of the road as the vehicle VEH. In a possible embodiment, the control unit 3 is configured to generate control signals CRTL for controlling a driving maneuver of the vehicle VEH in response to the calculated length L of the other vehicle VEH' and depending on the determined lane of the other vehicle VEH'. In a possible embodiment, the generation of the control signals is performed in real time in response to the determined lane of the other vehicle VEH' and the calculated length L of that vehicle VEH'. For instance, if it is determined in real time that the other vehicle VEH' driving in front of the vehicle VEH is changing its current lane, for example for performing an overtaking driving maneuver of itself, the overtaking driving maneuver of the following vehicle VEH' can be interrupted by the control unit 3.

Figure 6 shows a flowchart of a possible exemplary embodiment of a method for determining a length L of another vehicle VEH' by the vehicle length determination system of a vehicle VEH according to the second aspect of the present invention.

In a first step S1, a first distance d1 between a vehicle VEH and a front or rear side of the other vehicle VEH' is determined.

In a second step S2, a second distance d2 between the vehicle VEH and a vehicle component mounted to the chassis of the other vehicle VEH' is detected.

In a further step S3, the length L of the other vehicle VEH' is calculated automatically depending on the determined first and second distances d1, d2. The detection of the first distance d1 in step S1 and the detection of the second distance d2 in the second step S2 can be performed by the same or different detection units 2 of the vehicle length determination system 1. The calculation in step S3 of the length L of the other vehicle VEH' can be performed by a processor of the control unit 3 of the vehicle length determination system 1. The length L of the other vehicle VEH' is calculated in step S3 by subtracting the detected first distance d1 from the detected second distance d2 and by adding a standard value SV to the calculated difference. The standard value SV can be a configurable standard value read from a memory of the vehicle length determination system 1.

As illustrated in Figure 7, in a further step S4, control signals for controlling a driving maneuver of the vehicle VEH can be generated in response to the calculated length L of the other vehicle VEH'. The determination of the distances d1, d2 in the first step S1 and the second step S2 of the method can be performed continuously or triggered by a detected event. The method for determining a length L of another vehicle VEH' as illustrated in the exemplary embodiments shown in Figures 6, 7 can be performed by a processor implemented in a control unit of a driver assistance system of a vehicle. The determination of the length L of the other vehicle VEH' is performed in a preferred embodiment in real time.

Further embodiments of the method and system for determining a length L of another vehicle VEH' are possible.

In a possible embodiment, the determined length L of another vehicle is forwarded by a driver assistance system DAS of the vehicle VEH to a third vehicle. For example, in the traffic scenario illustrated in Figure 3, the determined length L of the vehicle VEH' in front of the vehicle VEH can be forwarded to a third vehicle VEH" following the vehicle VEH. In a possible exemplary embodiment, the driver assistance system DAS of the vehicle VEH can forward the length information data of the vehicle VEH' in front in a transmission signal to the third following vehicle VEH" driving behind the vehicle VEH. This signal can also include information, whether the driver of the vehicle VEH intends to overtake the first vehicle VEH'. The forwarded information about the length L of the first vehicle VEH' can be accompanied with distance information about the current distance d1 between the first vehicle VEH' and the following vehicle VEH. Since the third vehicle VEH" can measure its distance to the vehicle VEH and the length of the vehicle VEH a driver assistance system DAS of the vehicle VEH" is able to calculate the total minimum distance for an overtaking driving maneuver for overtaking both the vehicle VEH and the first vehicle VEH' within the vehicle group. In a typical traffic scenario, the first vehicle VEH' is a long truck having a high length L and driving at a relatively low speed along a road followed by a group of cars forced to follow the slow truck VEH' on the same road. If the driver of the first vehicle VEH following the truck VEH' has no intention of surpassing the truck VEH', the driver of a third vehicle VEH" can receive a signal from the driver assistance system DAS of the vehicle VEH indicating the determined length L of the truck VEH' and the distance d1 between the truck VEH' and the vehicle VEH. The driver assistance system DAS of the third vehicle VEH" can comprise a detection unit adapted to detect the distance between the two vehicles VEH, VEH" and the length of the vehicle VEH. By adding the length L of the truck VEH' and the following vehicle VEH as well as adding the distances between the vehicles, the total minimum distance for the intended overtaking driving maneuver can be calculated by a processing unit of the third vehicle VEH". The control unit 3 of the driver assistance system DAS of the third vehicle VEH" can then generate control signals CRTL for controlling the overtaking driving maneuver of the vehicle VEH" in response to the calculated total minimum distance required for performing a safe overtaking driving maneuver of the third vehicle VEH" to overtake both vehicles VEH, VEH'.

In a still further possible embodiment of the method and system according to the present invention, the driver of the first vehicle VEH' of the moving vehicle group may trigger the determination of the length L of his vehicle VEH' within the vehicle group by the driver assistance systems DAS of following vehicles, for example by transmitting a specific signal to the following vehicles VEH, VEH". For example, a driver of a slow truck seeing that the road in front of the truck VEH' is free from counter traffic can indicate this by setting a left turning light and/or waving a hand through a side window of the truck which is detected by the driver assistance system DAS of the following vehicle VEH.

Also other driving maneuvers can be supported by the vehicle length determination system 1 according to the present invention, for example an automatic lane change of a vehicle VEH.

### REFERENCE SIGNS

- 1: vehicle length determination system
- 2: detection unit
- 3: control unit
- 4: memory
- 5: actuator

## Claims

1. A vehicle length determination system (1) of a vehicle (VEH) configured to determine a length (L) of another vehicle (VEH') in the vehicle's vicinity,
said vehicle length determination system (1) comprising:
(a) a detection unit (2) adapted to detect a first distance (d1) between the vehicle (VEH) and a front or rear side of the other vehicle (VEH'), and adapted to detect a second distance (d2) between the vehicle (VEH) and a vehicle component mounted to a chassis of the other vehicle (VEH'), and
(b) a control unit (3) adapted to calculate the length (L) of the other vehicle (VEH') depending on the determined first and second distance (d1, d2).

2. The vehicle length determination system according to claim 1, wherein said detection unit (2) is adapted to detect as a second distance (d2) the distance between the vehicle (VEH) and a side mirror component (SMC) of the other vehicle (VEH').

3. The vehicle length determination system according to claim 1 or 2, wherein said control unit (3) is adapted to calculate the length (L) of the other vehicle (VEH') by subtracting the detected first distance (d1) from the detected second distance (d2) and adding a standard value (SV).

4. The vehicle length determination system according to any of the preceding claims 1 to 3, wherein said detection unit (2) comprises:
a radar unit, and/or
a LIDAR unit, and/or
a camera unit.

5. The vehicle length determination system according to any of the preceding claims 1 to 4, wherein said control unit (3) is configured to generate control signals (CRTL) for controlling a driving maneuver of said vehicle (VEH) in response to the calculated length (L) of the other vehicle (VEH').

6. The vehicle length determination system according to any of the preceding claims 3 to 5, wherein the standard value (SV) is a configurable standard value stored in a memory (4) of said vehicle length determination system (1).

7. The vehicle length determination system according to any of the preceding claims 1 to 6, wherein the control unit (3) is configured to determine a relative velocity (V_{R}) between the vehicle (VEH) and the other vehicle (VEH') depending on monitored first and/or second distances (d1, d2) detected by said detection unit (2).

8. The vehicle length determination system according to claim 7, wherein said control unit (3) is configured to generate control signals (CRTL) for controlling a driving maneuver of said vehicle (VEH) in response to the calculated length (L) of the other vehicle (VEH') and in response to the determined relative velocity (V_{R}).

9. The vehicle length determination system according to any of the preceding claims 1 to 8, wherein said control unit (3) is adapted to determine whether the other vehicle (VEH') is on the same or on a different lane depending on sensor signals provided by said at least one detection unit (2).

10. The vehicle length determination system according to claim 9, wherein the control unit (3) is configured to generate control signals (CRTL) for controlling a driving maneuver of said vehicle (VEH) in response to the calculated length (L) of the other vehicle (VEH') and the determined lane of the other vehicle (VEH').

11. A method for determining a length (L) of another vehicle by a vehicle length determination system (1) of a vehicle (VEH), said method comprising the steps of:
(a) detecting (S1) a first distance (d1) between the vehicle (VEH) and a front or rear side of the other vehicle (VEH') ;
(b) detecting (S2) a second distance (d2) between the vehicle (VEH) and a vehicle component mounted to a chassis of the other vehicle (VEH') ; and
(c) calculating (S3) the length (L) of the other vehicle (VEH') depending on the determined first and second distances (d1, d2).

12. The method according to claim 11, wherein the length (L) of the other vehicle (VEH') is calculated by subtracting the detected first distance (d1) from the detected second distance (d2) and by adding a standard value (SV) to the calculated difference.

13. The method according to claim 11 or 12, wherein control signals for controlling a driving maneuver of said vehicle (VEH) are generated (S4) in response to the calculated length (L) of the other vehicle (VEH').

14. The method according to one of the preceding claims 11 to 14, wherein the determination of the distances (d1, d2) is performed continuously or triggered by an event.

15. A driver assistance system (DAS) comprising a vehicle length determination system (1) according to any of the preceding claims 1 to 10.
